(19) Europäisches Patentamt / European Patent Office / Office européen des brevets

(11) **EP 2 819 424 A1**

(12) **DEMANDE DE BREVET EUROPEEN**

(43) Date de publication:
**31.12.2014 Bulletin 2015/01**

(51) Int Cl.:
*H04N 21/438* (2011.01)  *H04N 21/45* (2011.01)
*H04N 21/466* (2011.01)  *H04N 21/442* (2011.01)
*H04N 21/433* (2011.01)

(21) Numéro de dépôt: **14173736.1**

(22) Date de dépôt: **24.06.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **24.06.2013 FR 1356001**

(71) Demandeur: **Orange**
**75015 Paris (FR)**

(72) Inventeurs:
• **Marchand, Hervé**
**35770 VERN SUR SEICHE (FR)**
• **Bouvet, Eric**
**35520 MONTREUIL LE GAST (FR)**

(54) **Procédé d'amelioration du temps de changement entre programmes audiovisuels**

(57) L'invention concerne un procédé gestion du changement de chaînes (ZAPPING) de contenus numériques reçues par un dispositif de télévision. Le dispositif est apte à recevoir et décoder simultanément des chaînes de contenus numériques (P, C1, C2, ...CN) avec un débit total maximum (RMAX). Le procédé étant caractérisé en ce qu'il comporte les étapes suivantes.
- Une étape de Réception et consommation d'une chaîne primaire (P) ;
- Une étape de calcul du débit restant (DR(t)) pour le dispositif ;

- Une étape de prise en compte d'au moins une donnée relative à un utilisateur (AU, 10, P+, P-, PREF) du dispositif ;
- En fonction du débit restant et d'au moins une donnée relative à l'utilisateur :
o Une étape de détermination d'un nombre (N) de chaînes secondaires (C1, C2, ..., CN) à préacheminer ;
o Pour chaque chaîne secondaire (Ci), une étape de détermination d'un niveau de qualité à préacheminer ;
- Une étape de réception de chaque chaîne secondaire (C1 ... CN) selon les niveaux de qualité prédéterminés.

**FIGURE 1**

**Description**

Domaine technique

L'invention se rapporte aux communications de contenus multimédia, et plus particulièrement aux chaînes de contenus multimédia.

On entend par contenu multimédia tout contenu audio ou vidéo, ou plus généralement tout autre contenu numérique. On entend par chaîne de contenus multimédia, ou chaîne de télévision, une succession de tels contenus dans le temps.

L'invention s'applique à la consommation de chaînes de contenus de télévision sur un terminal connecté à un réseau de type Internet. Par consommation, on entend ici un traitement réalisé en vue d'une restitution s'effectuant sur le même dispositif, ou sur un autre dispositif. Le traitement peut notamment inclure un décodage du contenu numérique.

Elle a trait à un procédé de changement de chaîne de contenus numériques par un terminal apte à recevoir plusieurs chaînes depuis un réseau et à abandonner la consommation de l'une de ces chaînes pour basculer sur une autre chaîne. L'invention se rapporte plus spécifiquement à la réduction du temps nécessaire à ce changement de chaîne, aussi appelé *zapping,* dans le but de diminuer le temps d'attente de l'utilisateur.

Etat de la technique

La télévision sur Internet permet à un utilisateur d'un terminal connecté à un serveur de chaînes de contenus de télévision via un réseau de télécommunication de rendre, ou restituer, une chaîne numérique de son choix parmi une liste prédéterminée de chaînes possibles.

Le terminal de restitution émet généralement une requête à destination du serveur, en indiquant la chaîne choisie et il reçoit en retour un flux de données numériques relatives à cette chaîne.

Une chaîne numérique comprend typiquement des films, des vidéos, ou de manière plus générale tout type de contenu multimédia numérique qui peut être transmis dans le réseau considéré.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage, ou visualisation, de la vidéo correspondante avec sa bande-son associée. Dans la suite, on assimilera le contenu numérique à une vidéo et la restitution par le terminal, ou consommation par l'utilisateur du terminal, à une visualisation.

La diffusion de chaînes de contenus numériques sur Internet est souvent basée sur des protocoles client-serveur de la famille HTTP (de l'anglais *Hyper Text Transport Protocol).* En particulier, le téléchargement en mode progressifs des contenus numériques, ou mode HAS ( pour *HTTP Adaptative Streaming*) permet de transporter et consommer les données en temps réel, c'est-à-dire que les données numériques sont transmises sur le réseau et restituées par le terminal au fur et à mesure de leur arrivée. Dans ce contexte, le terminal dispose traditionnellement d'une mémoire tampon (*buffer* en anglais) de réception d'une capacité donnée, par exemple quelques images constitutives d'une vidéo. Le terminal doit recevoir une partie des données numériques dans cette mémoire tampon avant de pouvoir les restituer. Ce mode de distribution est particulièrement utile quand le débit dont dispose l'utilisateur n'est pas garanti pour le transfert en temps réel de la vidéo.

Le téléchargement progressif permet en effet de diffuser et recevoir des données suivant différentes qualités correspondant par exemple à différents débits. Ces différentes qualités sont décrites dans un fichier de paramètres disponible en téléchargement sur un serveur de données, par exemple un serveur de chaînes de contenus. Quand le terminal client souhaite accéder à une chaîne de contenu, ce fichier de description permet de sélectionner le bon format pour le contenu à consommer en fonction de la bande passante disponible, des capacités de stockage et de décodage du terminal client ou encore de la taille de son écran. Ce type de technique permet notamment de tenir compte des variations de bande passante sur la liaison entre le terminal client et le serveur de chaînes de contenus.

Il est souhaitable, dans ce contexte, que l'utilisateur puisse basculer dans un temps raisonnable sur la visualisation d'une nouvelle chaîne.

Selon certaines implémentations connues, la chaîne potentiellement suivante de celle en cours de consommation est pré-acheminée jusqu'au terminal pour y être stockée après décodage, dans l'attente d'une éventuelle consommation. La chaîne suivante est par exemple sélectionnée en fonction du déplacement de l'utilisateur dans le sens « programme + » ou « programme - » du guide de programmes, matérialisé sur sa télécommande par les touches P+ ou P-. La chaîne suivante est pré-acheminée dans une qualité inférieure afin de ne pas pénaliser le débit de la chaîne en cours de consommation. Lorsque l'utilisateur requiert effectivement la chaîne selon le sens initié, par exemple P+, la chaîne pré-acheminée est décodée et affichée dans une qualité inférieure en attendant qu'elle puisse être acheminée, décodée et restituée à une qualité plus élevée.

Par exemple, le brevet US7281259 (*Channel selection device for use in digital/analog broadcasting receiver and digital/analog broadcasting receiver equipped with the same*) décrit un tel mécanisme dans le contexte d'un réseau de télévision numérique diffusée.

Dans ce type d'implémentation, une seule chaîne est rendue disponible par le pré-acheminement. Si l'utilisateur change de sens, c'est-à-dire s'il décide subitement d'utiliser la touche P- au lieu de la touche P+, le programme visé n'est pas disponible immédiatement car il n'a pas été préacheminé, et le temps de basculement, ou zapping, augmente.

Il est possible également, dans le contexte du streaming adaptatif, de pré-acheminer une chaîne secondaire jusqu'au terminal client : la chaîne en cours est acheminée à un débit élevé et l'autre chaîne à un débit plus faible. De cette manière, l'utilisateur peut basculer rapidement sur n'importe quelle chaîne pré-acheminée, mais la qualité qui lui est offerte est minimale. Ce mécanisme est assez rarement utilisé dans le contexte de la télévision sur Internet car, le débit étant variable et partagé entre les chaînes, il fonctionnerait au détriment de la chaîne en cours.

L'invention offre une solution ne présentant pas les inconvénients de l'état de la technique.

L'invention

A cet effet, selon un aspect fonctionnel, l'invention a pour objet un procédé de gestion du changement de chaînes de contenus numériques reçues par un dispositif de restitution, le dispositif étant apte à recevoir et décoder simultanément des chaînes de contenus numériques avec un débit total maximum, le procédé étant caractérisé en ce qu'il comporte les étapes suivantes :

- Réception et consommation d'une chaîne primaire ;
- Calcul du débit restant pour le dispositif ;
- Prise en compte d'au moins une donnée relative à un utilisateur du dispositif ;
- En fonction du débit restant et d'au moins une donnée relative à l'utilisateur :

    o Détermination d'au moins une chaîne secondaire à préacheminer ;
    o Pour ladite au moins une chaîne secondaire, détermination d'un niveau de qualité à préacheminer ;

- Réception de ladite au moins une chaîne secondaire selon le niveau de qualité déterminé.

Selon l'invention, il est ainsi rendu possible d'adapter la qualité (ou le débit) d'une chaîne secondaire en fonction de sa probabilité de sélection par l'utilisateur. Notamment, le débit de chacune de ces chaînes peut être déterminée en fonction des débits possibles indiqués par le serveur dans un fichier de paramètres de téléchargement progressif adaptatif, ou streaming (par exemple, un fichier de type *manifest*).

Selon un mode de mise en oeuvre particulier de l'invention, un procédé tel que décrit ci-dessus est caractérisé en ce que l'étape de détermination d'au moins une chaîne secondaire à préacheminer est précédée d'une étape de détermination du nombre de chaînes secondaires à préacheminer.

Ainsi, l'invention offre l'avantage de préparer les chaînes à un basculement rapide en préacheminant à l'avance plusieurs chaînes s'adaptant au mieux au profil de l'utilisateur : le nombre de chaînes secondaires, ainsi que le débit qui leur est attribué, est rendu dépendant des données relatives à l'utilisateur, qu'il s'agisse par exemple de ses données de préférence ou des actions qu'il a effectuées au préalable. Contrairement au mécanisme prévu par l'état de l'art, qui achemine uniquement un programme parmi les plus probables selon le déplacement de l'utilisateur dans le guide de programmes, l'invention propose d'en préacheminer plusieurs sur la base de critères propres à l'utilisateur de manière générale, qui peuvent être multiples. La détermination d'un niveau de qualité à préacheminer est effectuée pour chaque chaîne secondaire à préacheminer.

Selon un autre mode de mise en oeuvre particulier de l'invention, qui pourra être mis en oeuvre alternativement ou cumulativement avec le précédent, un procédé tel que décrit ci-dessus est caractérisé en ce que l'étape de détermination d'au moins une chaîne secondaire à préacheminer est précédée d'une étape de calcul d'une probabilité de sélection de ladite au moins une chaîne secondaire à préacheminer, et en ce que la détermination d'un niveau de qualité à préacheminer est faite en fonction de la probabilité de sélection de ladite chaîne secondaire

Il est donc possible selon ce mode de réalisation d'adapter la qualité ou le débit de chaque chaîne en fonction de sa probabilité de sélection : plus cette probabilité est élevée et plus la chaîne aura de probabilité d'être préacheminée et de recevoir un débit important. Notamment, le débit de chacune de ces chaînes peut être déterminé en fonction des débits possibles indiqués par le serveur dans un fichier de paramètres de *streaming.*

Selon un autre mode de mise en oeuvre particulier de l'invention, qui pourra être mis en oeuvre alternativement ou cumulativement avec les précédents, un procédé tel que décrit ci-dessus est en outre caractérisé en ce que la donnée relative à l'utilisateur est une durée mesurée depuis le dernier changement de chaîne.

Ce mode de mise en oeuvre de l'invention permet de s'adapter au mieux au comportement d'un utilisateur, en fonction de la durée depuis laquelle il regarde une chaîne. En effet, si l'utilisateur n'a pas changé de chaîne depuis un temps important, on peut supposer à bon droit qu'il va continuer à regarder cette chaîne jusqu'à la fin du programme en cours ; au contraire, s'il a changé de chaîne récemment, on peut supposer qu'il va continuer à solliciter de nouveaux changements, ou basculements de chaîne et de ce fait pré-acheminer davantage de chaînes pour pouvoir anticiper au mieux ces changements.

Selon un autre mode de mise en oeuvre particulier de l'invention, qui pourra être mis en oeuvre alternativement ou cumulativement avec les précédents, un procédé tel que décrit ci-dessus est en outre caractérisé en ce que la donnée relative à l'utilisateur est une fréquence de changement de chaîne.

Comme le mode précédent, auquel il peut être avantageusement combiné, ce mode de réalisation offre l'avantage de prévoir au mieux le comportement de l'utilisateur en fonction de ses habitudes de basculement : si la fréquence de « zapping » est élevée, il est judicieux de prévoir un pré-acheminement de plusieurs chaînes, alors que dans le cas contraire, une réduction du nombre de chaînes pré-acheminées pour un spectateur qui « zappe » peu permet de lui offrir un débit maximal sur la chaîne en cours de visualisation en pré-acheminant un minimum de chaînes secondaires.

Selon un autre mode de mise en oeuvre particulier de l'invention, qui pourra être mis en oeuvre alternativement ou cumulativement avec les précédents, un procédé tel que décrit ci-dessus est en outre caractérisé en ce que la donnée relative à l'utilisateur est issue d'un déplacement dans le guide de programmes.

Ce mode de mise en oeuvre de l'invention permet de prendre en compte l'évolution de l'utilisateur dans la grille de programmation qui lui est offerte, par exemple d'anticiper ses comportements futurs en fonction de son utilisation des touches P+ et P-de la télécommande de son dispositif de télévision, ou encore de son choix d'une chaîne avec une certaine thématique, etc. Cette anticipation apporte l'avantage de prévoir non plus une seule chaîne mais plusieurs à pré-acheminer, par exemple toutes les chaînes de programmes relatifs à la même thématique (sport, cinéma, etc.) en les classant de surcroît dans le sens de déplacement de l'utilisateur, par exemple P+ ou P-.

Selon un autre mode de mise en oeuvre particulier de l'invention, qui pourra être mis en oeuvre alternativement ou cumulativement avec les précédents, un procédé tel que décrit ci-dessus est en outre caractérisé en ce que la donnée relative à l'utilisateur est déduite de ses préférences.

Ce mode de mise en oeuvre de l'invention permet de prendre en compte les préférences de l'utilisateur en tant que téléspectateur, par exemple le type de chaînes de contenus qu'il aime visualiser, ou le type de programmes, ou encore ses préférences en matière de basculement : s'il souhaite bénéficier d'une meilleure qualité au détriment du temps de zapping, on pourra pré-acheminer moins de programmes ; s'il préfère les films d'action, on pourra veiller à pré-acheminer en priorité les chaînes qui proposent de tels contenus au moment où il est en train d'utiliser le dispositif de télévision, etc.

Selon un aspect matériel, l'invention concerne également un dispositif de gestion du changement de chaînes de contenus numériques, le dispositif étant apte à recevoir et décoder simultanément des chaînes de contenus numériques avec un débit total maximum, le dispositif comprenant :

- Un module de réception et consommation d'une chaîne primaire ;
- Un module de calcul du débit restant ;
- Un module de prise en compte d'au moins une donnée relative à un utilisateur ;
- En fonction du débit restant, et d'au moins une donnée relative à l'utilisateur :

    o Un module de détermination d'au moins une chaîne secondaire à préacheminer ; ;
    o Un module de détermination d'un niveau de qualité pour ladite au moins une chaîne secondaire à préacheminer ;

- Un module de réception de ladite au moins une chaîne secondaire selon le niveau de qualité prédéterminé.

Selon un autre aspect matériel, l'invention concerne également une passerelle de service comportant un dispositif de gestion du changement de chaînes de contenus numériques tel que décrit ci-dessus.

Selon encore un autre aspect matériel, l'invention a trait à un programme d'ordinateur pour une passerelle domestique comprenant les instructions logicielles pour commander la mise en oeuvre par ladite passerelle des étapes du procédé de gestion du changement de chaînes de contenus numériques tel que décrit ci-dessus lorsque le programme est exécuté par la passerelle.

Selon encore un autre aspect matériel, l'invention a trait à un support d'enregistrement lisible par un processeur de données sur lequel est enregistré un programme comprenant des instructions de code de programme pour l'exécution des étapes du procédé de gestion du changement de chaînes de contenus numériques tel que défini ci-dessus.

L'invention sera mieux comprise à la lecture de la description qui suit, donnée à titre d'exemple et faite en référence aux dessins annexés.

<u>Les figures:</u>

La figure 1 représente une architecture de télévision sur Internet basée sur l'utilisation du streaming adaptatif selon l'invention.

La figure 2 représente une architecture d'une passerelle de service implémentant un mode de réalisation de l'invention.

La figure 3 représente un chronogramme selon un mode de réalisation de l'invention.

La figure 4 représente un organigramme de calcul pour un mode de réalisation du *zapping* optimisé selon l'invention.

La figure 5 représente un ensemble de chaînes primaire et secondaires avec une probabilité associée selon un mode de réalisation de l'invention.

<u>Description détaillée d'un exemple de réalisation illustrant l'invention</u>

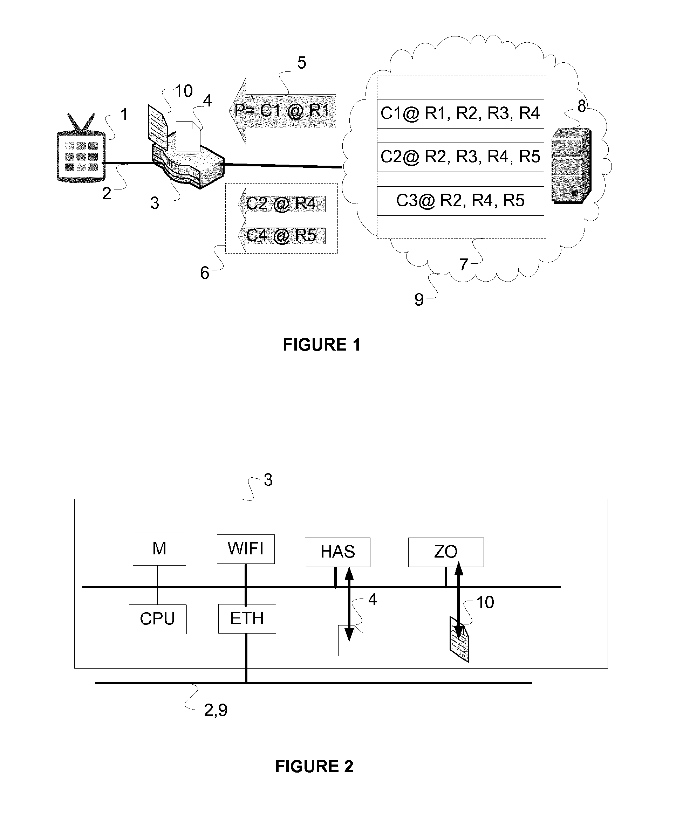

La figure 1 représente une architecture de télévision sur Internet basée sur l'utilisation du streaming adaptatif (HAS) selon l'invention.
Le terminal (1) se trouve dans cet exemple situé dans un réseau local symbolisé par le lien Ethernet (2) piloté par une passerelle domestique (3). Le contexte du réseau local est donné à titre d'exemple et pourrait être transposé aisément à un réseau Internet de type « best effort », un réseau mobile (3G, 4G), etc.
Un serveur de contenus numériques de télévision (8) se trouve selon cet exemple dans le réseau large bande (9) mais il pourrait indifféremment être situé dans le réseau local (2), par exemple dans la passerelle domestique (3) ou tout autre équipement capable d'héberger un tel serveur de contenus. Le serveur de contenus (8) reçoit par exemple des chaînes de contenus de télévision numérique (7) en provenance d'un réseau de télévision diffusée, non représenté, et les met à disposition des terminaux clients. Selon un autre exemple, le serveur de contenus (8) prépare lui-même ses contenus et les assemble sous forme de chaînes de contenus de télévision (7) avant de les stocker par exemple sur un disque dur.
Classiquement, le terminal client (1), par exemple un PC ou un téléviseur connecté, aussi désigné sous le terme « dispositif de restitution », souhaite entrer en communication avec le serveur de contenus de télévision (8) pour recevoir une chaîne de contenus composée d'un ou plusieurs contenus (films, documentaires, séquences publicitaires, etc.) séquentiels dans le temps. L'ensemble des données descriptives de ces programmes s'appelle un guide de programmes, proposé à l'utilisateur du terminal (1) pour l'aider dans son choix.
Il est fréquent, dans ce contexte client-serveur, de recourir, pour échanger les données entre le terminal client (1) et le serveur (8), à une technique de type « adaptive streaming » basée sur le protocole HTTP. Ce type de technique permet notamment d'offrir une bonne expérience à l'utilisateur en tenant compte des variations de bande passante qui peuvent se produire sur la liaison entre le terminal client (1), ou sa passerelle de services (3), et le serveur de contenus (8).
Classiquement, différentes qualités peuvent être encodées pour le même contenu d'une chaîne, correspondant par exemple à différents débits. Plus généralement, on parlera de *qualité* pour se référer à une certaine résolution du contenu numérique (résolution spatiale, temporelle, niveau de qualité associée à la compression vidéo) avec un certain débit.
Chaque niveau de qualité est lui-même découpé sur le serveur de contenus en segments temporels (ou « fragments » de contenu). La description de ces différentes qualités et de la segmentation temporelle associée, ainsi que les fragments de contenu, sont décrits pour le terminal client et mis à sa disposition via leurs adresses Internet (URI : Universal Ressource Identifier). L'accès au contenu multimédia peut être direct ou indirect, l'URI fournissant dans ce dernier cas les paramètres permettant d'accéder au contenu au travers d'une seconde requête. L'ensemble de ces paramètres (qualités, adresses des fragments, etc.) est en général regroupé dans un fichier de paramètres, aussi appelé parfois *manifest.* On notera que ce fichier de paramètres peut être un fichier informatique ou un ensemble d'informations descriptives du contenu, accessible à une certaine adresse. Dans la suite, on se référera indifféremment, selon le contexte à l'expression « fichier de description » ou « manifest ».
Le terminal (1) possède ses propres caractéristiques en termes de capacité de décodage, d'affichage, etc. Dans un contexte de streaming adaptatif, il peut adapter ses requêtes pour recevoir et décoder la chaîne de contenus de télévision demandée par l'utilisateur à la qualité qui lui correspond au mieux. Dans notre exemple, si les chaînes de contenus de télévision sont disponibles aux débits 256Kb/s (kilobits par seconde) (R5), 512 kb/s (R4), 1024kb/s (R3), 2048kb/s (R2) et 4096kb/s(R1) et que le terminal client dispose d'une bande passante de 3000kb/s, il peut demander le contenu à n'importe quel débit inférieur, par exemple 2048kb/s. De manière générale, on note « Ci@Rj » la chaîne numéro i (il s'agit par exemple de l'indice de la *ieme* chaîne dans le plan de service d'un bouquet numérique d'un opérateur) avec la qualité j (par exemple le *j-ieme* niveau de qualité décrit dans le fichier *manifest*).

La passerelle de service (3) est dans cet exemple une passerelle domestique qui assure le routage des données entre le réseau large-bande (9) et le réseau local (2), gère les chaînes de contenus numériques en assurant notamment leur réception en provenance du réseau et leur décodage grâce aux décodeurs que l'on suppose ici intégrés à la passerelle (3). En variante, les décodeurs peuvent se trouver ailleurs dans le réseau large-bande (9) ou local (2), notamment au niveau d'un élément de type STB (de l'anglais *Set-Top-Box*) connecté au téléviseur (1), ou directement dans le téléviseur (1).

Pour visualiser une chaîne, le terminal (1) interroge tout d'abord la passerelle de service (3) pour obtenir une adresse du document de description (4) de la chaîne de contenus (C1) souhaité. La passerelle de service (3) répond en fournissant au terminal l'adresse du fichier de description (4). Dans la suite, on suppose que ce fichier est un fichier de type *manifest* selon la norme MPEG-DASH (noté « C1.mpd »). Alternativement, ce fichier peut être récupéré directement auprès d'un serveur Internet local ou externe au réseau local, ou se trouver déjà sur la passerelle de service au moment de la requête.

Un exemple de fichier *manifest* (MPD) conforme à la norme MPEG/DASH et comportant la description d'une chaîne disponible dans trois qualités différentes (N1, N2, N3) des contenus fragmentés est présenté en annexe 1.

Dans cet exemple simplifié, une seule chaîne est décrite (« redbul ») avec trois niveaux de qualité (256kb/s, 512kb/s et 2048kb/s). Les champs les plus pertinents sont surlignés en gras.

Ainsi, les URL d'accès aux deux premiers fragments vidéo pour le niveau N1 le plus élevé de la chaîne, correspondant au débit le plus élevé de 2048 kbps sont ici :

> *redbul_15sec_2048kbit/redbul_15sec1.m4s* et
> *redbul_15sec_200kbit/redbul_15sec350.m4s*

Ils sont accessibles à l'adresse précisée par la balise ouvrante *<BaseURL>*.

Une fois qu'elle dispose des adresses de fragments correspondant à la chaîne souhaitée, la passerelle de service procède à l'obtention des fragments de média via un téléchargement à ces adresses. On notera que ce téléchargement s'opère traditionnellement au travers d'une URL HTTP, mais pourrait également s'opérer au travers d'une adresse universelle (URI) décrivant un autre protocole (*dvb://monsegmentdecontenu* par exemple).

Le client du terminal 1 choisit la résolution la plus élevée, ici 2048 kb/s. On suppose donc, dans cet exemple qu'une partie de la bande passante du terminal client reste inutilisée : le client dispose globalement de 3Mb/s et le contenu de la chaîne C1 qu'il est en train de consommer a pour débit 2048kb/s. Il reste donc un certain débit disponible (3000 - 2048 = 952kb/s) pour pré-acheminer un certain nombre de chaînes de contenus, c'est-à-dire les faire parvenir jusqu'à la passerelle, ou jusqu'au terminal, de l'utilisateur, en vue de leur restitution future.

Selon l'état de l'art, la stratégie habituellement privilégiée est de pré-acheminer la chaîne potentiellement suivante de celle en cours de consommation (C1@R1, 5). La chaîne « suivante » est par exemple sélectionnée en fonction du déplacement de l'utilisateur dans le sens « programme + » ou « programme -» du guide de programmes, matérialisé sur sa télécommande par les touches P+ ou P-. La chaîne suivante, par exemple C2 dans le cas où l'utilisateur a sélectionné P+, est pré-acheminée jusqu'au terminal (1) dans une qualité inférieure, dans notre exemple 512kb/s (R4) (qualité disponible immédiatement inférieure à 952 kb/s) afin de ne pas pénaliser le débit de la chaîne C1 en cours de consommation (5). Lorsque l'utilisateur requiert effectivement la chaîne C2 selon le sens initié, P+, la chaîne pré-acheminée C2 est décodée et affichée à une qualité inférieure de 512kb/s en attendant qu'elle puisse être acheminée à une qualité plus élevée en vue de sa consommation. La chaîne suivante (C2) devient alors la chaîne courante (P=C2). Dans le même temps, la nouvelle chaîne suivante (C3 dans le sens P+) est pré-acheminée à la qualité 256kb/s. Cette technique comporte des limites : si l'utilisateur sélectionne P- alors qu'il avait initié un déplacement en P+, la chaîne requise n'est plus pré-acheminée et le temps de zapping devient élevé (temps nécessaire à l'acheminement d'une chaîne C4 qui n'avait pas été préalablement pré-acheminée).

Selon l'invention, un algorithme spécifique de calcul, disposé par exemple sur la passerelle domestique (3), est chargé de répartir intelligemment le débit restant entre plusieurs programmes, selon plusieurs critères, afin de servir au mieux les besoins de l'utilisateur en diminuant le temps nécessaire à basculer vers les programmes de son choix tout en lui fournissant la meilleure qualité possible, en fonction de ses préférences et de son comportement télévisuel : P+ ou P-, mais aussi type de chaînes préférées, habitudes de *zapping,* temps écoulé depuis le début de la visualisation de la chaîne principale, etc. Ainsi, non plus un seul mais plusieurs programmes secondaires (6) sont-ils pré-acheminés vers la passerelle en fonction de critères multiples : dans notre exemple il s'agit de la chaîne C2 au débit 512kb/s (R4), mais aussi la chaîne C4 à 256kb/s (R5).

La figure 2 représente une passerelle domestique implémentant un mode de réalisation de l'invention, comme par exemple la passerelle de service (3) de la figure 1.

Elle comprend, classiquement, des mémoires (M) associées à un processeur (CPU). Les mémoires peuvent être de type ROM (de l'anglais *Read Only Memory)* ou RAM (de l'anglais *Random Access Memory)* ou encore Flash. La passerelle (3) communique avec le réseau local (2) et le réseau Internet (9) via le module Ethernet (ETH) d'une part et éventuellement le module WIFI pour une communication locale sans fils. La passerelle de service (3) comprend en outre, conformément à l'invention, un module de gestion du streaming adaptatif (HAS) apte à prendre en compte les informations contenues dans le fichier *manifest* 4 pour demander un téléchargement sur le réseau de l'une des chaînes à l'une des qualités proposées dans le fichier de paramètres. La passerelle selon l'invention comporte également un module ZO de *Zapping* Optimisé, capable de déterminer à un instant donné quelles sont les chaînes et débits associés à pré-acheminer vers le terminal client. Ce module accède à un fichier (10) de paramètres utilisateurs. Ces paramètres peuvent être par exemple le temps (T) écoulé depuis le début de la visualisation du programme principal, les préférences (PREF) de l'utilisateur, sa dernière sélection (Ci) dans le guide programme, etc.

Les fichiers 4 et 7 peuvent être enregistrés par exemple dans les mémoires M de la passerelle ou se trouver à l'extérieur.

La passerelle de service selon l'invention peut aussi contenir d'autres modules comme un disque dur non représenté pour le stockage des fragments vidéo, un module de contrôle d'accès aux contenus, un module d'interface vidéo, d'autres modules lui permettant de communiquer avec l'extérieur via différents protocoles sur différents liens physiques, etc.

On notera que le terme *module* peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

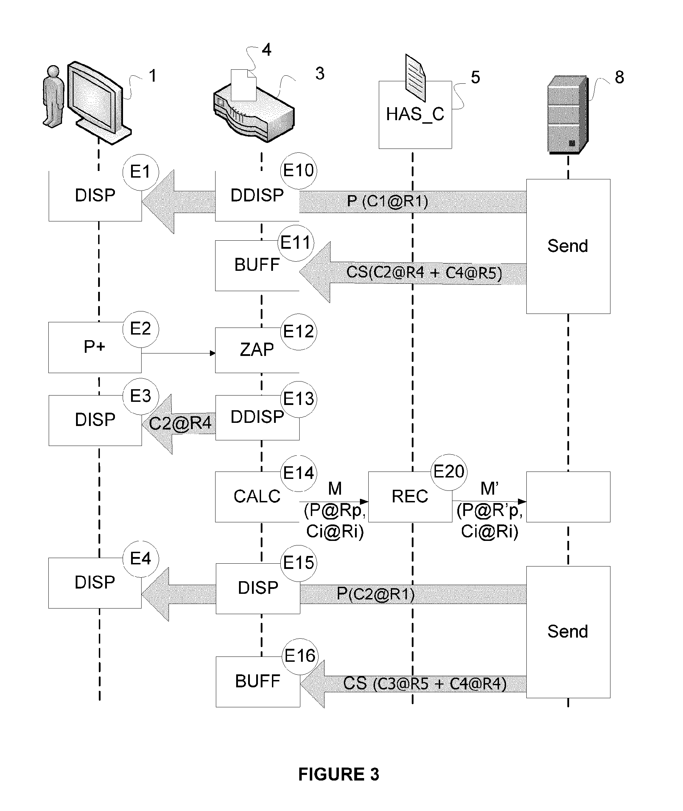

La figure 3 représente un chronogramme selon un mode de réalisation de l'invention.

On suppose que le terminal (1) est en cours de visualisation d'un contenu principal P à un débit R1 de 2048kb/s (étape E1). Par exemple, l'utilisateur a sélectionné le canal 1 à l'aide de la touche 1 de sa télécommande. Comme expliqué à l'appui de la figure 1, un certain nombre de chaînes secondaires (CS) sont pré-acheminées jusqu'au terminal pour être mises en buffer au cours d'une étape E11 (BUFF) : la chaîne C2 à 512kb/s et la chaîne C4 à 256kb/s (C2@R4 + C4@R5).

On suppose aussi que la passerelle domestique (3) dispose des informations relatives aux contenus, notamment le fichier de description *manifest* (4) qui peut lui avoir été transmis par exemple par le serveur de chaînes (8).

Lors d'une étape E2 (P+), l'utilisateur du terminal (3) produit une action pour changer de contenu : par exemple, l'utilisateur appuie sur la touche P+ de sa télécommande afin d'accéder à la chaîne suivante dans le plan de service. Le programme d'optimisation installé sur la passerelle, ZO (pour « Zapping Optimisé ») reçoit cette information de zapping lors d'une étape E12 (ZAP). Il procède alors à l'ordre d'affichage du programme requis, si celui-ci est disponible dans la liste des programmes CS, selon le débit disponible, au cours de l'étape E13 (DDISP). L'ordre est reçu par le terminal au cours d'une étape E3 (DISP) et la chaîne C2 reçue au débit R4 est affichée immédiatement.

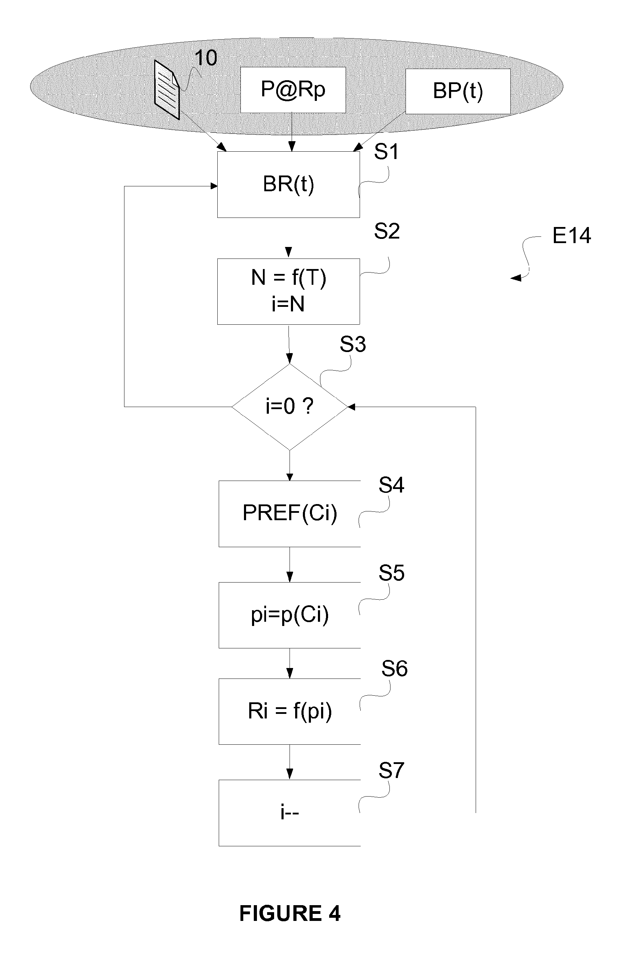

Puis au cours d'une étape E14 (CALC) suivante, le module ZO procède à un calcul dans le but de modifier non seulement l'acheminement de la chaîne principale (la suivante dans le plan de service, comme demandé) mais aussi des chaînes secondaires (CS). Un exemple de déroulement des sous-étapes d'un tel algorithme sera exposé plus tard à l'appui de la figure 4. Il aboutit notamment à la détermination d'un certain nombre de chaînes secondaires avec des qualités associées.

Le module client HAS en charge du streaming adaptatif reçoit au cours d'une étape E20 (REC), de la part du module ZO d'optimisation, un ensemble d'informations relatives aux chaînes à sélectionner et aux débits associés. Un exemple de telles informations peut prendre la forme d'un message M contenant une liste de chaînes à pré-acheminer avec la liste des débits associés : P@Rp, C3@Ri, C4@Rj... Noté M(Ci@Ri). Le module client HAS aura alors pour rôle de choisir la meilleure qualité, c'est-à-dire la valeur inférieure ou égale de débit la plus proche dans le fichier de paramètres (*manifest*), puis de demander au serveur les différentes chaînes au débit approprié (par exemple P@R1, C3@R5 et C4@R4) via un autre message M' (P@P'p, Ci@R'j) avec les valeurs exactes de débits requises, choisies dans le fichier *manifest*(4).

A l'issue de cette étape, la passerelle reçoit de la part du serveur de chaînes l'ensemble des nouveaux flux à rediriger pour l'affichage du programme de la chaîne principale (DISP, E15) ou la mise en *buffer et* éventuellement le décodage des données des chaînes secondaires (BUFF, E16).

Au cours de l'étape E4, le terminal client peut donc recevoir et restituer, éventuellement après décodage, le flux principal reçu (C2) avec le débit R1 le plus élevé. Ainsi le zapping s'est-il effectué dans les meilleures conditions possibles : on voit que sur requête de l'utilisateur, le terminal a pu afficher immédiatement le flux de la chaîne C2 requise avec un premier débit dégradé R4 puis lors d'une étape E4 avec un débit plus élevé R1. Ceci a été rendu possible par la disponibilité de la chaîne C2 au moment du zapping, et sera de nouveau rendu possible par la disponibilité des chaînes C3 et C4 lors d'un prochain zapping de l'utilisateur, à supposer que ce zapping ait été correctement prévu par l'étape de calcul E14.

C'est ce que détaille la figure 4 dans un mode de réalisation possible du module de *zapping* optimisé (ZO) selon l'invention.

On suppose que le module ZO dispose en entrées de l'identification de la chaîne en cours (P) et du débit associé (Rp), des préférences utilisateur (PREF), ainsi que d'une liste des actions que l'utilisateur a commises depuis une période de temps donnée, mémorisées par exemple dans le fichier (10) présenté à l'appui des figures 1 et 2.

Au cours d'une première étape S1, le module ZO calcule la bande passante restante (BR(t)) disponible en fonction notamment de la chaîne (P@Rp) en cours de visualisation par l'utilisateur et du débit (Rp) qui lui a été affecté, et aussi de la bande passante instantanée disponible en entrée de la passerelle. Une simple différence entre la bande passante instantanée (BP(t)) et le débit Rp donne le résultat souhaité BR(t).

On considère ici que le terminal a les moyens d'apprécier le débit réseau BP(t) au temps t du calcul. BP(t) est une variable non prévisible qui évolue au cours du temps. Le terminal peut en calculer une approximation acceptable en utilisant le débit courant sur le réseau et différentes données qu'il a mémorisées relativement aux téléchargements précédents.

En première approximation, il peut être supposé constant. On peut aussi supposer, au contraire, que ce débit de téléchargement, est variable et réévalué régulièrement par le terminal, par exemple toutes les 5 secondes, ou de manière cyclique. Dans cet exemple, le débit DR(t) peut être évalué de la manière suivante :

$$BP(t) = \alpha \times BP(t-1) + (1 - \alpha) \times DI(t) \qquad (1)$$

où :

- DI(t) est le Débit Immédiat mesuré par le terminal à l'instant t ;

- BP(t-1) est le débit estimé à l'instant de mesure précédent (par exemple 5 secondes auparavant) ;

- $\alpha$ est une valeur comprise entre 0 et 1 ; si on souhaite favoriser BP(t-1) par rapport à DI(t) on prendra par exemple $\alpha$ = 0,6, sinon on peut prendre $\alpha$ = 0,4.

A l'initialisation de l'algorithme, le débit BP(0) (débit estimé au début du téléchargement) peut prendre par exemple la valeur du débit moyen de téléchargement lors de plusieurs téléchargements effectués précédemment, ou le débit immédiat mesuré en fin de téléchargement du dernier fichier, ou toute autre combinaison des temps de téléchargements mémorisés par le terminal au cours de ses précédents téléchargements.

Lors d'une étape S2, en fonction de certains paramètres d'action de l'utilisateur, un nombre N de contenus secondaires à pré-acheminer est calculée.

Par exemple, si la bande passante disponible mesurée BP(t) est de 3000kbit/sec, si la video principale est diffusée à un debit de 2048kbit/sec et si on ne souhaite pas utiliser plus de 70% de la bande passante pour ne pas perturber la diffusion du contenu principal, il reste 0.3x3000 kb/s = 900kbit/s de bande passante disponible. Si les chaines sont diffusées dans leur débit les plus faible à 256Kbit/s cela permet de pré-acheminer 3 chaînes pour un débit total de 768kb/s, on positionne donc la variable N à 3.

Cette variable peut être ajustée en fonction d'un certain nombre d'autres paramètres, par exemple le paramètre T, l'intervalle de temps depuis lequel l'utilisateur n'a pas changé de chaîne. De plus, si l'utilisateur a changé très souvent de chaîne récemment, il peut être intéressant de pré-acheminer plusieurs chaînes en prévision de son futur comportement de zapping.

Une fois que la valeur du paramètre N est choisie (ici, 3), une variable i est initialisée avec cette valeur N du nombre de chaînes secondaires à pré-acheminer puis sa valeur est testée lors d'une étape S3 dans le but d'exécuter les deux étapes suivantes pour l'ensemble des chaînes de contenus secondaires.

Si la variable i n'est pas nulle au cours de l'étape S3, c'est-à-dire s'il reste encore des chaînes secondaires à préparer pour le pré-acheminement, une étape S4 est effectuée au cours de laquelle le module ZO effectue une lecture des préférences utilisateurs (PREF). Par préférences, on entend ici par exemple les préférences en termes de contenus, mais aussi l'historique les actions de l'utilisateur dans le temps, ses habitudes, etc. Par exemple, l'examen du dernier « zapping » de l'utilisateur donne une information sur ses déplacements futurs : comme déjà expliqué au-dessus, si l'utilisateur a choisi P+, le programme suivant le programme en cours se voit attribuer une probabilité plus élevée dans la liste des N chaînes à pré-acheminer.

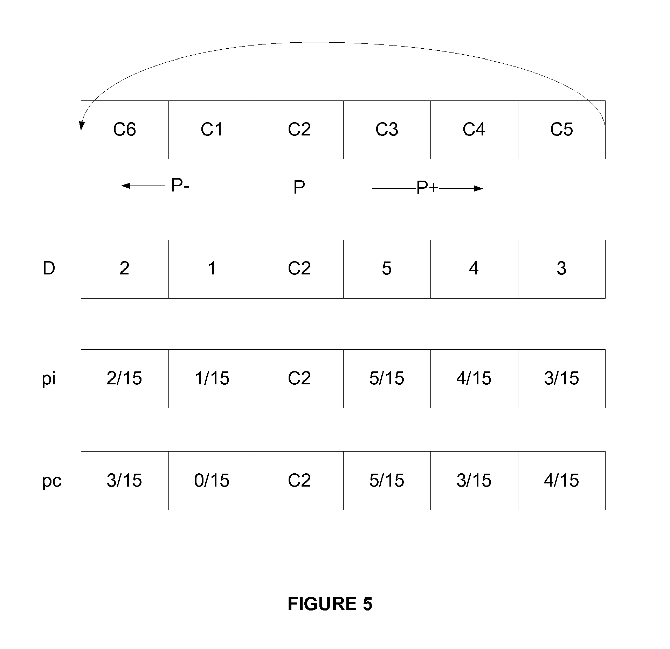

Un calcul de probabilités de sélection, c'est-à-dire de zapping, par l'utilisateur est effectué au cours de l'étape S5. Cette probabilité pi, ou p(Ci) exprime pour chaque chaîne Ci la probabilité que l'utilisateur zappe sur cette chaîne dans un temps futur (à paramétrer). Selon un exemple simple, illustré sur la figure 5, on peut affecter la probabilité Pi au contenu i de manière à ce que l'ensemble des probabilités soit égal à 1 et que le calcul soit effectué au prorata de la « distance » de la chaîne Ci à la chaîne P en cours ; le calcul peut être pondérée par le type de chaîne/contenu de chaîne sélectionné. Par distance, on entend ici la proximité de la chaîne Ci de la chaîne en cours dans le plan de service. Par exemple si la chaîne en cours P est la chaîne C2, si l'on dispose au total de 6 chaînes C1... C6 dans l'ordre alphanumérique, et si l'utilisateur a sélectionné P+, alors (voir tableau D de la figure 5):

- la chaîne C3 est à la distance 5 (la plus faible, c'est-à-dire que c'est la chaîne la plus proche de C2) ;
- La chaîne C4 est à la distance 4 ;

  ...
- La chaîne C1 est à la distance 1 (la plus élevée, c'est-à-dire la plus éloignée de C2).

On en déduit une première probabilité pour chacune des chaînes, comme représenté sur la figure 5, ligne 3 (pi), directement proportionnelle à la distance des chaînes dans le plan de service. Par exemple, la chaîne C3 a une probabilité de 5/15 d'être choisie.

On comprend ainsi que dans l'exemple particulier relatif à la figure 4 pour lequel le nombre N de chaînes à préacheminer est égal à 3, on retient les trois chaînes de probabilité la plus élevée, c'est-à-dire les chaînes C3, C4 et C5. Si, de plus, il est inscrit dans les préférences de l'utilisateur qu'il a une préférence pour les chaînes de sport, la chaîne C5 et la chaîne C6, qui sont des chaînes de ce type, peuvent recevoir une pondération supplémentaire représentative de leur probabilité plus élevée de sélection par l'utilisateur. En revanche, la chaîne C1 (e.g. chaîne animalière) est tout à fait en dehors des préférences. Un exemple de résultat corrigé (pc) après la prise en compte des préférences utilisateur est montré en figure 5, ligne 4.

Naturellement, toute variante à la portée de l'homme du métier est envisageable dans ce calcul : intervention d'autres paramètres, limitation du nombre de canaux pré-acheminés, probabilité inscrite directement dans le *manifest*, etc.

Une fois ce calcul de probabilités effectué, il reste, lors d'une étape S6, à multiplier par exemple chacune d'entre elles par le débit restant calculé préalablement (BR) pour obtenir le débit effectivement souhaité pour le canal i. Naturellement, le débit le plus proche inférieur sera choisi : ainsi, si le calcul aboutit à 278kb/s et que les débits offerts dans le *manifest* sont respectivement 256, 312, 524 kb/s, le débit immédiatement en-dessous de 278 sera choisi, c'est-à-dire 256.

Si tous les débits ont été calculés pour tous les programmes secondaires, c'est-à-dire si la variable i vaut zéro au cours d'une étape S3, alors le programme peut recommencer à l'étape S1 par la prise en compte de nouveaux paramètres externes (action de l'utilisateur, variation du débit instantané BP(t), etc.) et un nouveau débit résiduel BR(t) peut être calculé.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Notamment, l'invention peut être utilisée dans le contexte d'un terminal partagé entre plusieurs utilisateurs : les préférences de chaque utilisateur pourront être prises en compte indépendamment, aboutissant à des configurations de pré-acheminement et des temps de zapping différents selon l'utilisateur qui occupe le terminal à un instant donné.

**Annexe1**: *exemple de* **fichier manifest**

```
<?xml version= "1.0" encoding="UTF-8"?>
<MPD xmlns:xsi="http://www. w3.org/2001/XMLSchema-instance "
     xmlns="urn:mpeg:DASH:schema:MPD:2011"
     xsi:schemaLocation="urn:mpeg:DASH:schema:MPD:2011"          profiles="urn:mpeg:dash:profile:isoff-
main:2011 "
     type="static"
     mediaPresentationDuration="PT1H37M38S"
minBufferTime="PT15.0S">
    <BaseURL>http://www-itec.uni-klu.ac.at
/ftp/datasets/mmsys12/RedbulPlayStreets/redbul_15s/</BaseURL>
    <Period start="PT0S">
```

```
<AdaptationSet bitstreamSwitching="true">
<Representation id="0" codecs="avc1""mimeType="video/mp4" width="320"
height="240" startWithSAP= "1" bandwidth= "99880">
<SegmentBase>
        <Initialization sourceURL="redbul_15sec_256kbit/redbul_256kbit_dash.mp4"/>
</SegmentBase>
<SegmentList duration="15">
        <SegmentURL media=redbul_15sec_256kbit/redbul_15sec1.m4s"/>
        <SegmentURL media="redbul_15sec_256kbit/redbul_15sec2.m4s"/>
...
        <SegmentURL media="redbul_15sec_256kbit/redbul_15sec349.m4s"/>
        <SegmentURL media="redbul_15sec_256kbit/redbul_15sec350.m4s"/>
        </SegmentList>
</Representation>
<Representation id="1" codecs="avc1"mimeType= "video/mp4" width="320"
height="240"startWithSAP="1" bandwidth="148101">
<SegmentBase>
        <Initialization sourceURL="redbul_15sec_2048kbit/redbul_2048kbit_dash.mp4"/>
</SegmentBase>
<SegmentList duration="15">
        <SegmentURL media= "redbul_15sec_2048kbit/redbul_15sec1.m4s"/>
        <SegmentURL media="redbul_15sec_2048kbit/redbul_15sec2.m4s"/>
...
        <SegmentURL media= "redbul_15sec_2048kbit/redbul_15sec35.m4s"/>
        </SegmentList>
</Representation>
<Representation id="2" codecs="avc1"" mimeType="video/mp4" width="480"
height="360" startWithSAP="1" bandwidth="200133">
<SegmentBase>
        <Initialization sourceURL="redbul_15sec_/redbul_512kbit_dash.mp4"/>
</SegmentBase>
<SegmentList duration="15">
        <SegmentURL media="redbul_15sec_512kbit/redbul_15sec1.m4s"/>
        <SegmentURL media="redbul_15sec_512kbit/redbul_15sec2.m4s"/>
...
        <SegmentURL media="redbul_15sec_512kbit/redbul_15sec350.m4s">
        </SegmentList>
</Representation>
```

**Revendications**

1. Procédé de gestion du changement de chaînes (ZAPPING) de contenus numériques reçues par un dispositif de restitution, le dispositif étant apte à recevoir et décoder simultanément des chaînes de contenus numériques (P, C1, C2, ...CN) avec un débit total maximum (RMAX), le procédé étant **caractérisé en ce qu'**il comporte les étapes suivantes :

   - Réception et consommation d'une chaîne primaire (P) ;
   - Calcul du débit restant (DR(t)) pour le dispositif ;
   - Prise en compte d'au moins une donnée relative à un utilisateur (AU, 10, P+, P-, PREF) du dispositif ;
   - En fonction du débit restant et d'au moins une donnée relative à l'utilisateur :

      o Détermination d'au moins une chaîne secondaire (C1, C2, ..., CN) à pré-acheminer ;
      o Pour ladite au moins une chaîne secondaire (Ci), détermination d'un niveau de qualité (Ri) à préacheminer ;

   - Réception de ladite au moins une chaîne secondaire (C1 ... CN) selon le niveau de qualité (Ri) déterminé.

2. Procédé de communication selon la revendication 1, **caractérisé en ce que** l'étape de détermination d'au moins une chaîne secondaire à préacheminer est précédée d'une étape (S2) de détermination du nombre (N, i) de chaînes secondaires (C1 ... CN) à préacheminer.

3. Procédé de communication selon la revendication 1, **caractérisé en ce que** l'étape de détermination d'au moins une chaîne secondaire à préacheminer est précédée d'une étape (S5) de calcul d'une probabilité de sélection (p(Ci)) de ladite au moins une chaîne secondaire à préacheminer, et **en ce que** la détermination du niveau de qualité à préacheminer (Ri) est faite en fonction de la probabilité de sélection de ladite chaîne secondaire.

4. Procédé de communication selon la revendication 1, **caractérisé en ce que** la donnée relative à l'utilisateur est une durée (T) mesurée depuis le dernier changement de chaîne.

5. Procédé de communication selon la revendication 1, **caractérisé en ce que** la donnée relative à l'utilisateur est une fréquence de changement de chaîne.

6. Procédé de communication selon la revendication 1, **caractérisé en ce que** la donnée relative à l'utilisateur est issue d'un déplacement (P+, P-) dans le guide de programmes.

7. Procédé de communication selon la revendication 1, **caractérisé en ce que** la donnée relative à l'utilisateur est déduite est déduite de ses préférences (10, PREF).

8. Dispositif (ZO) de gestion du changement de chaînes de contenus numériques, le dispositif étant apte à recevoir et décoder simultanément des chaînes de contenus numériques (P, C1, C2,... CN) avec un débit total maximum (RMAX), le dispositif comprenant :

   - Un module de réception et consommation d'une chaîne primaire (P) ;
   - Un module de calcul du débit restant (DR) ;
   - Un module de prise en compte d'au moins une donnée relative à un utilisateur (AU, 10, P+, P-, PREF) ;
   - En fonction du débit restant et d'au moins une donnée relative à l'utilisateur :

      o Un module de détermination d'au moins une chaîne secondaire (C1, C2, ..., CN) à préacheminer ;
      o Un module de détermination d'un niveau de qualité (Ri) pour ladite au moins une chaîne secondaire (Ci) à pré-acheminer ;

   - Un module de réception de ladite au moins une chaîne secondaire (C1 ... CN) selon le niveau de qualité prédéterminé.

9. Passerelle de service (3) comportant un dispositif (ZO) de gestion du changement de chaînes de contenus numériques selon la revendication 6.

10. Programme d'ordinateur pour une passerelle domestique (3) comprenant les instructions logicielles pour commander la mise en oeuvre par ladite passerelle des étapes du procédé de gestion du changement de chaînes selon la revendication 6 lorsque le programme est exécuté par la passerelle.

5

10    4

P= C1 @ R1

1

10

C1@ R1, R2, R3, R4

8

2

3

C2 @ R4

C4 @ R5

C2@ R2, R3, R4, R5

C3@ R2, R4, R5

6

7

9

**FIGURE 1**

3

| M | WIFI | HAS | ZO |

CPU | ETH

4

10

2,9

**FIGURE 2**

**FIGURE 3**

10

P@Rp

BP(t)

S1

BR(t)

S2

N = f(T)
i=N

S3

i=0 ?

E14

S4

PREF(Ci)

S5

pi=p(Ci)

S6

Ri = f(pi)

S7

i--

**FIGURE 4**

| | | | | | |
|---|---|---|---|---|---|
| C6 | C1 | C2 | C3 | C4 | C5 |

$\longleftarrow$ P- $\longrightarrow$ P $\longrightarrow$ P+ $\longrightarrow$

| D | | | | | |
|---|---|---|---|---|---|
| 2 | 1 | C2 | 5 | 4 | 3 |

| pi | | | | | |
|---|---|---|---|---|---|
| 2/15 | 1/15 | C2 | 5/15 | 4/15 | 3/15 |

| pc | | | | | |
|---|---|---|---|---|---|
| 3/15 | 0/15 | C2 | 5/15 | 3/15 | 4/15 |

**FIGURE 5**

## RAPPORT DE RECHERCHE EUROPEENNE

Numéro de la demande

EP 14 17 3736

Europäisches Patentamt
European Patent Office
Office européen des brevets

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/244665 A1 (BOWEN DONALD [US] ET AL) 2 octobre 2008 (2008-10-02) | 1,2,4-10 | INV. H04N21/438 |
| Y | * alinéa [0034] - alinéa [0039] * * alinéa [0055] - alinéa [0056] * * alinéa [0064] - alinéa [0072] * | 3 | H04N21/45 H04N21/466 H04N21/442 H04N21/433 |
| Y | US 2013/091297 A1 (MINDER LORENZ CHRISTOPH [US] ET AL) 11 avril 2013 (2013-04-11) * alinéa [0026] - alinéa [0028] * * alinéa [0047] * | 3 | |
| X | CHAE YOUNG LEE ET AL: "Reducing Channel Zapping Time in IPTV Based on User's Channel Selection Behaviors", IEEE TRANSACTIONS ON BROADCASTING, IEEE SERVICE CENTER, PISCATAWAY, NJ, US, vol. 56, no. 3, 1 septembre 2010 (2010-09-01), pages 321-330, XP011312107, ISSN: 0018-9316 * le document en entier * | 1,2,4-10 | |
| X | AHMAD M Z ET AL: "Prediction-based channel zapping latency reduction techniques for IPTV systems â A survey", EMERGING TECHNOLOGIES, 2009. ICET 2009. INTERNATIONAL CONFERENCE ON, IEEE, PISCATAWAY, NJ, USA, 19 octobre 2009 (2009-10-19), pages 466-470, XP031580161, ISBN: 978-1-4244-5630-7 * le document en entier * | 1,2,4-10 | DOMAINES TECHNIQUES RECHERCHES (IPC) H04N |

-/--

Le présent rapport a été établi pour toutes les revendications

| Lieu de la recherche | Date d'achèvement de la recherche | Examinateur |
|---|---|---|
| Munich | 27 octobre 2014 | Vaquero, Raquel |

Europäisches
Patentamt

European
Patent Office

Office européen
des brevets

**RAPPORT DE RECHERCHE EUROPEENNE**

Numéro de la demande

EP 14 17 3736

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | IRAJ SODAGAR: "The MPEG-DASH Standard for Multimedia Streaming Over the Internet", IEEE MULTIMEDIA, IEEE SERVICE CENTER, NEW YORK, NY, US, vol. 18, no. 4, 1 avril 2011 (2011-04-01), pages 62-67, XP011378371, ISSN: 1070-986X, DOI: 10.1109/MMUL.2011.71 * page 2, colonne 2 - page 3, colonne 1 * ----- | 3 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 27 octobre 2014 | Vaquero, Raquel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 17 3736

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-10-2014

| Document brevet cité au rapport de recherche | Date de publication | Membre(s) de la famille de brevet(s) | Date de publication |
|---|---|---|---|
| US 2008244665 A1 | 02-10-2008 | AUCUN | |
| US 2013091297 A1 | 11-04-2013 | CN 103843301 A | 04-06-2014 |
| | | EP 2764674 A1 | 13-08-2014 |
| | | KR 20140072183 A | 12-06-2014 |
| | | US 2013091297 A1 | 11-04-2013 |
| | | WO 2013052774 A1 | 11-04-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7281259 B